# EUROPEAN PATENT SPECIFICATION

(11) **EP 3 125 615 B1**
(45) Date of publication and mention of the grant of the patent: **03.03.2021**
(21) Application number: 16181731.7
(22) Date of filing: 28.07.2016
(51) Int. Cl.: H04W 48/20, H04W 48/02, H04W 12/08

(54) **METHOD, APPARATUS AND SYSTEM FOR A SMART DEVICE TO ACCESS A ROUTER**
VERFAHREN, VORRICHTUNG UND SYSTEM FÜR EINE INTELLIGENTE VORRICHTUNG ZUM ZUGRIFF AUF EINEN ROUTER
PROCÉDÉ, APPAREIL ET SYSTÈME PERMETTANT À UN DISPOSITIF INTELLIGENT D'ACCÈDER À UN ROUTEUR

(30) Priority: 28.07.2015 CN 201510452197
(43) Date of publication of application: 01.02.2017
(73) Proprietor: Xiaomi Inc., Beijing 100085 (CN)
(72) Inventor: HOU, Enxing, Beijing, 100085 (CN); DING, Yi, Beijing, 100085 (CN); WANG, Yuanbo, Beijing, 100085 (CN)
(74) Representative: Hughes, Andrea Michelle

(56) References cited:
- EP-A1- 2 750 461
- EP-A1- 2 814 217
- WO-A1-2014/079499
- WO-A2-2009/120898
- AU-A1- 2015 202 885
- US-A1- 2011 013 569
- US-A1- 2011 196 962
- US-A1- 2015 139 211

## Description

### TECHNICAL FIELD

The present disclosure generally relates to the technical field of network communications, and more particularly, to a method, and a computer program for a smart device to access a router via a server, as well as to the corresponding smart device and server.

### BACKGROUND

Typically, some kinds of smart devices provided with WiFi (wireless local area network) function, when in a state of being ready to access network, may broadcast message carrying device description information of themselves, and all surrounding WiFi devices may receive the message. Such a feature is utilized by certain WiFi auxiliary devices in their connection solutions. Specifically, when a device to access is detected, an SSID (Service Set Identifier) and a password may be sent to the device via broadcast message, so as to facilitate the device to access a designated router. Controlling access to a router for a smart device is taught in AU2015 202 885.

Smart devices are able to access the router quickly in such a manner. However, a risk exists since the smart device of a user may be connected by neighbors. WO 2009/120898 A2 relates to device managed access point lists in wireless communications. US2011/013569 A1 relates to a system and method of automatically connecting a mobile communication device to a network using a communications resource database. US2011/196962 A1 relates to a method for obtaining information from a local terminal environment.

### SUMMARY

In order to overcome problems existing in related art, embodiments of the present disclosure provide a method, and a computer program for a smart device to access a router via a server, as well as the corresponding server and smart device. The invention enables corresponding processes to be performed by judging whether the router currently accessed by the smart device is an access-barred router.

According to a first aspect, there is provided a method for a smart device to access a router as claimed in claim 1.

[DELETED]

The transmitting a corresponding instruction to the smart device according to the judgment result includes:
if the router currently accessed by the smart device is an access-barred router, transmitting a reset instruction to the smart device, the reset instruction instructing the smart device to resume a state of being not connected with any router; or
if the router currently accessed by the smart device is an access-barred router, transmitting a disconnect instruction to the smart device, the disconnect instruction instructing the smart device to disconnect a connection with the router currently accessed; or
if the router currently accessed by the smart device is an access-barred router, transmitting a reconnect instruction to the smart device, the reconnect instruction instructing the smart device to disconnect a connection with the router currently accessed and try to reconnect with another router.

[DELETED]

The transmitting a corresponding instruction to the smart device according to the judgment result includes:
if the router currently accessed by the smart device is an access-permitted router, transmitting a connection holding instruction to the smart device, the connection holding instruction instructing the smart device to hold a state of being connected with the router currently accessed.

Prior to the receiving an identifier of the smart device and an SSID of the router currently accessed by the smart device, the method further includes:
receiving the identifier of the smart device and the collection including SSIDs of routers corresponding to the identifier of the smart device for a mapping storage.

Also provided is a server for a smart device to access a router as described in claim 4.

[DELETED]

According to another aspect, there is provided a smart device configured to access a router as defined in claim 5.

According to another aspect of the present disclosure, there is provided a computer program as defined in claim 7.

Following advantageous effects may be achieved in technical solution provided by the embodiments of the present disclosure.

According to the embodiments described above, when the smart device is to access the router, it is judged timely whether the router currently accessed by the smart device is an access-barred router according to the SSID of the router currently accessed and the collection containing SSIDs of routers corresponding to the identifier of the smart device. A corresponding instruction is transmitted to the smart device based on the judgment result for further process, so as to prevent the smart device from accessing the access-barred router continuously.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram illustrating a system for a smart device to access a router according to an exemplary embodiment.
Fig. 2 is a flow chart illustrating a method for a smart device to access a router according to an exemplary embodiment I.
Fig. 3 is a flow chart illustrating a method for a smart device to access a router according to an exemplary embodiment II, which is not according to the invention and is present for illustration purpose only.
Fig. 4 is a flow chart illustrating a method for a smart device to access a router according to an exemplary embodiment III, which is not according to the invention and is present for illustration purpose only
Fig. 5 is a flow chart illustrating a method for a smart device to access a router according to an exemplary embodiment IV, which is not according to the invention and is present for illustration purpose only.
Fig. 6 is a block diagram illustrating an apparatus for a smart device to access a router according to an exemplary embodiment.
Fig. 7 is a block diagram illustrating a judgment module in the apparatus for a smart device to access a router according to the exemplary embodiment.
Fig. 8 is a block diagram illustrating a transmission module in an apparatus for a smart device to access a router according to an exemplary embodiment I.
Fig. 9 is a block diagram illustrating an apparatus for a smart device to access a router according to an exemplary embodiment II.
Fig. 10 is a block diagram illustrating a process module in the apparatus for a smart device to access a router according to the exemplary embodiment II.
Fig. 11 is a block diagram illustrating a recommended apparatus applicable for a shooting equipment according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

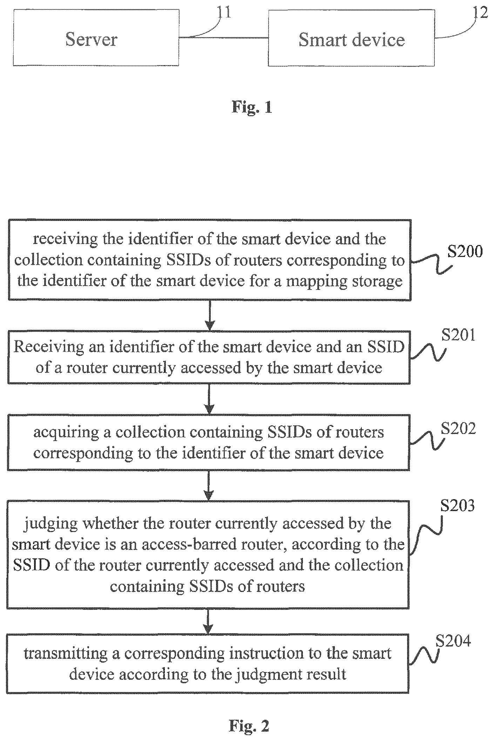

For a better understanding of the disclosure, the description will begin with a system for a smart device to access a router according to the disclosure. As shown in Fig. 1, the system for a smart device to access a router includes a server 11 and a smart device 12.

The server 11 is configured to: receive an identifier of the smart device and an SSID of a router currently accessed by the smart device; acquire a collection containing SSIDs of routers corresponding to the identifier of the smart device; judge whether the router currently accessed by the smart device is an access-barred router, according to the SSID of the router currently accessed and the collection containing SSIDs of routers, so as to obtain a judgment result; and transmit a corresponding instruction to the smart device according to the judgment result.

The smart device 12 is configured to transmit the identifier of the smart device and the SSID of the router to the server when the smart device is to access the router; receive from the server a corresponding instruction generated according to the judgment result; and perform a corresponding process according to the instruction.

According to the embodiment described above, when the smart device is to access the router, it is judged timely whether the router currently accessed by the smart device is an access-barred router according to the SSID of the router currently accessed and the collection containing SSIDs of routers corresponding to the identifier of the smart device. A corresponding instruction is transmitted to the smart device based on the judgment result for further process, so as to prevent the smart device from accessing the access-barred router continuously.

An interactive flow between the server and the smart device will be described as follows.

First of all, the server receives the identifier of the smart device and the collection containing SSIDs of routers corresponding to the identifier of the smart device for a mapping storage.

Then, when the smart device is to access the router, the identifier of the smart device and the SSID of the router are transmitted to the server.

Then, the server receives the identifier of the smart device and the SSID of the router currently accessed by the smart device.

Then, the server acquires the collection containing SSIDs of routers corresponding to the identifier of the smart device.

Then, the server judges whether the router currently accessed by the smart device is an access-barred router, according to the SSID of the router currently accessed and the collection containing SSIDs of routers, to obtain a judgment result.

Then, the server transmits the corresponding instruction to the smart device based on the judgment result.

Then, the smart device receives from the server the corresponding instruction generated based on the judgment result.

Then, the smart device performs the corresponding process according to the instruction.

Following description will be given for the server side and the smart device side, respectively. The server side will be described first.

Fig. 2 is a flow chart illustrating a method for a smart device provided with Wi-Fi function to access a router according to an exemplary embodiment. As shown in Fig. 2, the method for a smart device to access a router is applicable in a server or an application program, and includes the following steps S200-S204.

In step S201, receiving an identifier of the smart device and an SSID of a router currently accessed by the smart device.

In step S202, acquiring a collection containing SSIDs of routers corresponding to the identifier of the smart device.

In step S203, judging whether the router currently accessed by the smart device is an access-barred router, according to the SSID of the router currently accessed and the collection containing SSIDs of routers, to obtain a judgment result.

In step S204, transmitting a corresponding instruction to the smart device according to the judgment result.

According to the embodiment described above, when the smart device is to access the router, it is judged whether the router currently accessed by the smart device is an access-barred router according to the SSID of the router currently accessed and the collection containing SSIDs of routers corresponding to the identifier of the smart device. A corresponding instruction is transmitted to the smart device based on the judgment result for further process, so as to prevent the smart device from accessing the access-barred router continuously.

In an embodiment, the step S203 includes:
if the collection containing SSIDs of routers is a collection containing SSIDs of access-barred routers and the SSID of the router currently accessed exists in the collection containing SSIDs of access-barred routers, determining the router currently accessed by the smart device as an access-barred router; or
if the collection containing SSIDs of routers is a collection containing SSIDs of access-barred routers and the SSID of the router currently accessed does not exist in the collection containing SSIDs of access-barred routers, determining the router currently accessed by the smart device as an access-permitted router.

According to the embodiment described above, the collection containing SSIDs of routers is a collection containing SSIDs of access-barred routers. It is judged whether the router currently accessed by the smart device is an access-barred router by determining whether the SSID of the router currently accessed exists in the collection containing SSIDs of access-barred routers. Herein, the collection containing SSIDs of access-barred routers may be provided by a user according to actual settings.

In an embodiment, the step S203 includes:
if the collection containing SSIDs of routers is a collection containing SSIDs of access-permitted routers and the SSID of the router currently accessed does not exist in the collection containing SSIDs of access-permitted routers, determining the router currently accessed by the smart device as an access-barred router;
if the collection containing SSIDs of routers is a collection containing SSIDs of access-permitted routers and the SSID of the router currently accessed exists in the collection containing SSIDs of access-permitted routers, determining the router currently accessed by the smart device as an access-permitted router.

According to the embodiment described above, the collection containing SSIDs of routers is a collection containing SSIDs of access-permitted routers. It is judged whether the router currently accessed by the smart device is an access-barred router by determining whether the SSID of the router currently accessed exists in the collection containing SSIDs of access-permitted routers. Herein, the collection containing SSIDs of access-permitted routers may be provided by a user according to actual settings.

In an embodiment, the step S204 includes:
if the router currently accessed by the smart device is an access-barred router, transmitting a reset instruction to the smart device, the reset instruction instructing the smart device to resume a state of being not connected with any router; or
if the router currently accessed by the smart device is an access-barred router, transmitting a disconnect instruction to the smart device, the disconnect instruction instructing the smart device to disconnect a connection with the router currently accessed; or
if the router currently accessed by the smart device is an access-barred router, transmitting a reconnect instruction to the smart device, the reconnect instruction instructing the smart device to disconnect a connection with the router currently accessed and try to reconnect with another router; or
if the router currently accessed by the smart device is an access-permitted router, transmitting a connection holding instruction to the smart device, the connection holding instruction instructing the smart device to hold a state of being connected with the router currently accessed.

According to the embodiment described above, a corresponding process may be performed according to the judgment result. If the router currently accessed by the smart device is an access-barred router, a connection with the current router may be disconnected timely. Otherwise, the connection with the current router may be held.

As shown in Fig. 2, the method includes a following step prior to the step S201.

In step S200, receiving the identifier of the smart device and the collection containing SSIDs of access-barred routers corresponding to the identifier of the smart device for a mapping storage. The identifier of the smart device and the collection containing SSIDs of routers are received from the smart device.

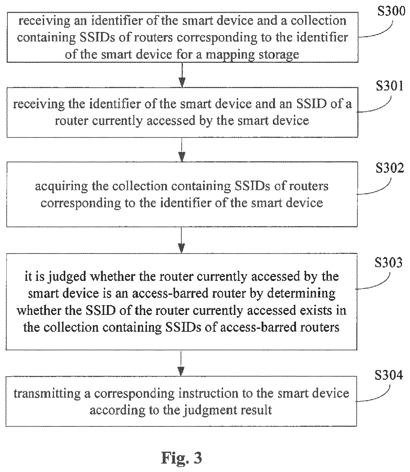

Fig. 3 is a flow chart illustrating a method for a smart device to access a router according to an exemplary embodiment, which is not according to the invention and is present for illustration purposes only. As shown in Fig. 3, the method for a smart device to access a router is applicable in a server or an application program, and includes the following steps S300-S304.

In step S300, receiving an identifier of the smart device and a collection containing SSIDs of routers corresponding to the identifier of the smart device for a mapping storage.

In step S301, receiving the identifier of the smart device and an SSID of a router currently accessed by the smart device.

In step S302, acquiring the collection containing SSIDs of routers corresponding to the identifier of the smart device.

In step S303, if the collection containing SSIDs of routers is a collection containing SSIDs of access-barred routers, it is judged whether the router currently accessed by the smart device is an access-barred router by determining whether the SSID of the router currently accessed exists in the collection containing SSIDs of access-barred routers. The step may include: if the collection containing SSIDs of routers is a collection containing SSIDs of access-barred routers and the SSID of the router currently accessed exists in the collection containing SSIDs of access-barred routers, determining the router currently accessed by the smart device as an access-barred router; or if the collection containing SSIDs of routers is a collection containing SSIDs of access-barred routers and the SSID of the router currently accessed does not exist in the collection containing SSIDs of access-barred routers, determining the router currently accessed by the smart device as an access-permitted router.

In step S304, transmitting a corresponding instruction to the smart device according to the judgment result.

According to the embodiment described above, when the smart device is to access the router, it is judged timely whether the router currently accessed by the smart device is an access-barred router according to the SSID of the router currently accessed and the collection containing SSIDs of routers corresponding to the identifier of the smart device. A corresponding instruction is transmitted to the smart device based on the judgment result for further process, so as to prevent the smart device from accessing the access-barred router continuously.

The step S304 includes:
if the router currently accessed by the smart device is an access-barred router, transmitting a reset instruction to the smart device, the reset instruction instructing the smart device to resume a state of being not connected with any router; or
if the router currently accessed by the smart device is an access-barred router, transmitting a disconnect instruction to the smart device, the disconnect instruction instructing the smart device to disconnect a connection with the router currently accessed; or
if the router currently accessed by the smart device is an access-barred router, transmitting a reconnect instruction to the smart device, the reconnect instruction instructing the smart device to disconnect a connection with the router currently accessed and try to reconnect with another router; or
if the router currently accessed by the smart device is an access-permitted router, transmitting a connection holding instruction to the smart device, the connection holding instruction instructing the smart device to hold a state of being connected with the router currently accessed.

According to the embodiment described above, a corresponding process may be performed according to the judgment result. If the router currently accessed by the smart device is an access-barred router, a connection with the current router may be disconnected timely. Otherwise, the connection with the current router may be held.

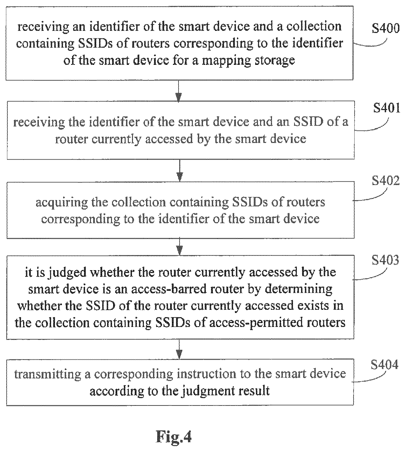

Fig. 4 is a flow chart illustrating a method for a smart device to access a router according to an exemplary embodiment, which is not according to the invention and is present for illustration purposes only. As shown in Fig. 4, the method for a smart device to access a router is applicable in a server or an application program, and includes the following steps S400-S404.

In step S400, receiving an identifier of the smart device and a collection containing SSIDs of routers corresponding to the identifier of the smart device for a mapping storage.

In step S401, receiving the identifier of the smart device and an SSID of a router currently accessed by the smart device.

In step S402, acquiring the collection containing SSIDs of routers corresponding to the identifier of the smart device.

In step S403, if the collection containing SSIDs of routers is a collection containing SSIDs of access-permitted routers, it is judged whether the router currently accessed by the smart device is an access-barred router by determining whether the SSID of the router currently accessed exists in the collection containing SSIDs of access-permitted routers. The step may include: if the collection containing SSIDs of routers is a collection containing SSIDs of access-permitted routers and the SSID of the router currently accessed does not exist in the collection containing SSIDs of access-permitted routers, determining the router currently accessed by the smart device as an access-barred router; or if the collection containing SSIDs of routers is a collection containing SSIDs of access-permitted routers and the SSID of the router currently accessed exists in the collection containing SSIDs of access-permitted routers, determining the router currently accessed by the smart device as an access-permitted router.

In step S404, transmitting a corresponding instruction to the smart device according to the judgment result.

According to the embodiment described above, when the smart device is to access the router, it is judged whether the router currently accessed by the smart device is an access-barred router according to the SSID of the router currently accessed and the collection containing SSIDs of routers corresponding to the identifier of the smart device. A corresponding instruction is transmitted to the smart device based on the judgment result for further process, so as to prevent the smart device from accessing the access-barred router continuously.

The step S404 includes:
if the router currently accessed by the smart device is an access-barred router, transmitting a reset instruction to the smart device, the reset instruction instructing the smart device to resume a state of being not connected with any router; or
if the router currently accessed by the smart device is an access-barred router, transmitting a disconnect instruction to the smart device, the disconnect instruction instructing the smart device to disconnect a connection with the router currently accessed; or
if the router currently accessed by the smart device is an access-barred router, transmitting a reconnect instruction to the smart device, the reconnect instruction instructing the smart device to disconnect a connection with the router currently accessed and try to reconnect with another router; or
if the router currently accessed by the smart device is an access-permitted router, transmitting a connection holding instruction to the smart device, the connection holding instruction instructing the smart device to hold a state of being connected with the router currently accessed.

According to the embodiment described above, a corresponding process may be performed according to the judgment result. If the router currently accessed by the smart device is an access-barred router, a connection with the current router may be disconnectedquickly. Otherwise, the connection with the current router may be held.

The smart device side will be described as follows.

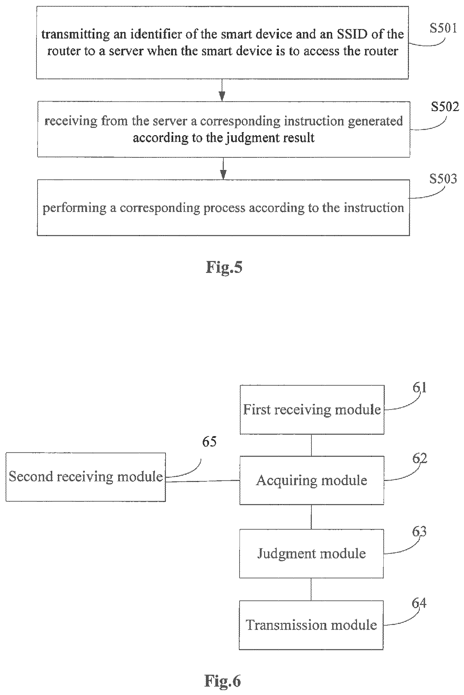

Fig. 5 is a flow chart illustrating a method for a smart device to access a router according to an exemplary embodiment, which is not according to the invention and is present for illustration purposes only. As shown in Fig. 5, the method for a smart device to access a router is applicable in a smart device or an application program, and includes the following steps S501-S503.

In step S501, transmitting an identifier of the smart device and an SSID of the router to a server when the smart device is to access the router, the server being configured to judge whether the router currently accessed by the smart device is an access-barred router to obtain a judgment result.

In step S502, receiving from the server a corresponding instruction generated according to the judgment result.

In step S503, performing a corresponding process according to the instruction.

According to the embodiment described above, when the smart device is to access the router, the identifier of the smart device and the SSID of the router currently accessed are transmitted to the server, so that a corresponding instruction can be generated at the server by judging whether the router currently accessed by the smart device is an access-barred router. A corresponding process may be performed by the smart device upon receiving the instruction, so as to prevent the smart device from accessing the access-barred router continuously.

The step S503 includes:
resuming a state of being not connected with any router if the instruction is a reset instruction;
disconnecting a connection with the router currently accessed if the instruction is a disconnect instruction;
disconnecting a connection with the router currently accessed and trying to connect with another router if the instruction is a reconnect instruction; or
holding a connection with the router currently accessed if the instruction is a connection hold instruction.

According to the embodiment described above, if the router currently accessed by the smart device is an access-barred router, a connection with the current router may be disconnected timely. Otherwise, the connection with the current router may be held. Thus, the smart device is prevented from accessing the access-barred router continuously.

An application scenario of the disclosure will be described as follows.

First of all, when a WiFi smart device is not connected with any router, it may broadcast a message carrying device description information of itself, which can be received by surrounding mobile terminals such as mobile phones.

Then, a prompt message of "New Device Found" will be received at a terminal with an application program, named "Smart Home" (a program used for management of WiFi smart devices), installed therein. A user of the terminal is able to select a router to be accessed and input password for the smart device according to following interactive hints, so as to facilitate the smart device to access a server.

Then, upon a successful access of the device, the terminal user is able to find the device in a device list of the application program "Smart Home". After clicking on the list to enter into a device control interface, the user can control the device and check a status of the device.

Furthermore, the user may set "SSIDs of access-barred routers" for the device via the device control interface. Based on a list generated by the application program scanning WiFi signal around the user, the user may select SSIDs of some routers which the smart device is barred from accessing. Then, the application program transmits an identifier of the device as well as SSIDs of those access-barred router to the server for storage.

In this way, if the device is reset by the user, it may be found in the application program by other users around the device before accessing a router timely. However, when other users connect the device with their own routers, the server will transmit a reset instruction to the device if it is determined that, according to a device identifier and an SSID of the router received from the smart device, the device is to access an access-barred router.

Thus, to a certain extent, the user's device may be prevented from being connected by neighbors, or the user's device may be prevented from accessing access-barred routers continuously.

Fig. 6 is a block diagram illustrating an apparatus for a smart device provided with Wi-Fi function to access a router according to an exemplary embodiment. As shown in Fig. 6, the apparatus for a smart device to access a router includes:
a first receiving module 61 configured to receive an identifier of the smart device and an SSID of a router currently accessed by the smart device;
an acquiring module 62 configured to acquire a collection containing SSIDs of routers corresponding to the identifier of the smart device;
a judgment module 63 configured to judge whether the router currently accessed by the smart device is an access-barred router, according to the SSID of the router currently accessed and the collection containing SSIDs of routers, to obtain a judgment result; and
a transmission module 64 configured to transmit a corresponding instruction to the smart device according to the judgment result.

According to the embodiment described above, when the smart device is to access the router, it is judged timely whether the router currently accessed by the smart device is an access-barred router according to the SSID of the router currently accessed and the collection containing SSIDs of routers corresponding to the identifier of the smart device. A corresponding instruction is transmitted to the smart device based on the judgment result for further process, so as to prevent the smart device from accessing the access-barred router continuously.

The apparatus further includes:
a second receiving module 65 configured to receive, from the smart device, the identifier of the smart device and the collection containing SSIDs of access-barred routers corresponding to the identifier of the smart device for a mapping storage.

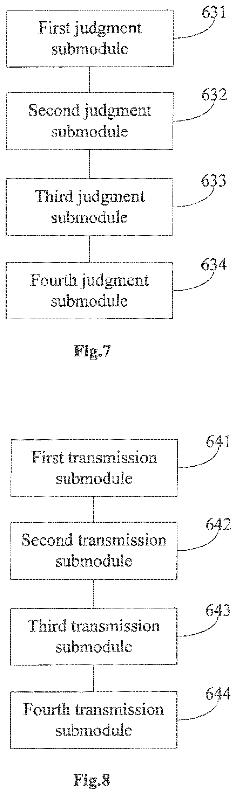

As shown in Fig. 7, the judgment module 63 includes:
a first judgment submodule 631 configured to, if the collection containing SSIDs of routers is a collection containing SSIDs of access-barred routers and the SSID of the router currently accessed exists in the collection containing SSIDs of access-barred routers, determine the router currently accessed by the smart device as an access-barred router; or
a second judgment submodule 632 configured to, if the collection containing SSIDs of routers is a collection containing SSIDs of access-permitted routers and the SSID of the router currently accessed does not exist in the collection containing SSIDs of access-permitted routers, determine the router currently accessed by the smart device as an access-barred router.

the judgment module 63 may further include:
a third judgment submodule 633 configured to, if the collection containing SSIDs of routers is a collection containing SSIDs of access-barred routers and the SSID of the router currently accessed does not exist in the collection containing SSIDs of access-barred routers, determine the router currently accessed by the smart device as an access-permitted router; or
a fourth judgment submodule 634 configured to, if the collection containing SSIDs of routers is a collection containing SSIDs of access-permitted routers and the SSID of the router currently accessed exists in the collection containing SSIDs of access-permitted routers, determine the router currently accessed by the smart device as an access-permitted router.

As shown in Fig. 8, the transmission module 64 includes:
a first transmission submodule 641 configured to, if the router currently accessed by the smart device is an access-barred router, transmit a reset instruction to the smart device, the reset instruction instructing the smart device to resume a state of being not connected with any router; or
a second transmission submodule 642 configured to, if the router currently accessed by the smart device is an access-barred router, transmit a disconnect instruction to the smart device, the disconnect instruction instructing the smart device to disconnect a connection with the router currently accessed; or
a third transmission submodule 643 configured to, if the router currently accessed by the smart device is an access-barred router, transmit a reconnect instruction to the smart device, the reconnect instruction instructing the smart device to disconnect a connection with the router currently accessed and try to reconnect with another router.

The transmission module 64 may further include:
a fourth transmission submodule 644 configured to, if the router currently accessed by the smart device is an access-permitted router, transmit a connection hold instruction to the smart device, the connection hold instruction instructing the smart device to hold a connection with the router currently accessed.

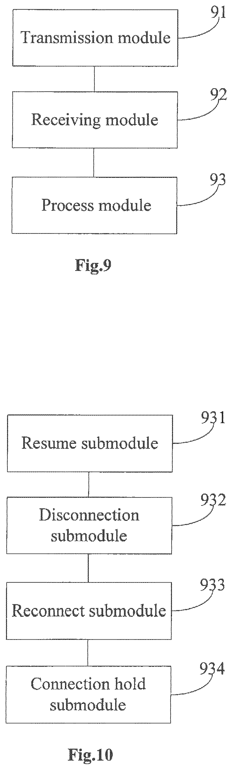

As shown in Fig. 9, an apparatus for a smart device provided with wi-Fi function to access a router includes:
a transmission module 91 configured to transmit, to the server, an identifier of the smart device, a collection comprising SSIDs of access-barred routers corresponding to the identifier of the smart device, and to transmit, to the server, the identifier of the smart device and an SSID of the router to a server when the smart device is to access the router, the server being configured to judge whether the router currently accessed by the smart device is an access-barred router to obtain a judgment result;
a receiving module 92 configured to receive from the server a corresponding instruction generated according to the judgment result; and
a process module 93 configured to perform a corresponding process according to the instruction.

As shown in Fig. 10, the process module 93 includes:
a resume submodule 931 configured to resume a state of being not connected with any router if the instruction is a reset instruction;
a disconnection submodule 932 configured to disconnect a connection with the router currently accessed if the instruction is a disconnect instruction;
a reconnect submodule 933 configured to disconnect a connection with the router currently accessed and try to connect with another router if the instruction is a reconnect instruction; or
a connection hold submodule 934 configured to hold a connection with the router currently accessed if the instruction is a connection hold instruction.

With respect to the apparatus in the above embodiments, the specific manners for performing operations for respective modules therein have been described in detail in the embodiments regarding the method, which will not be elaborated herein.

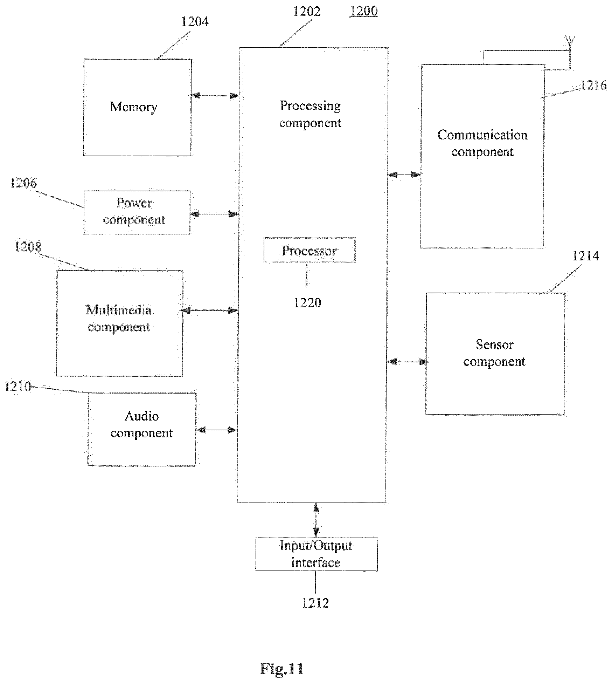

Fig. 11 is a block diagram illustrating an apparatus 1200 for a smart device to access a router according to an exemplary embodiment. The apparatus 1200 may be any one selected from a group consisting of a mobile phone, a computer, a digital broadcast terminal device, a messaging device, a gaming console, a tablet, a medical device, an exercise equipment, a personal digital assistant (PDA), and the like.

Referring to Fig. 11, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls overall operations of the apparatus 1200, such as operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any application or method operated on the apparatus 1200, contact data, phonebook data, messages, pictures, videos, etc. The memory 1204 may be implemented using any type of volatile or non-volatile memory apparatus or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 1206 provides power to various components of the apparatus 1200. The power component 1206 may include a power management system, one or more power sources, and other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signal from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1208 includes a front camera and/or a rear camera. The front camera and/or the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signal. For example, the audio component 1210 includes a microphone (MIC) configured to receive external audio signal when the apparatus 1200 is in an operation mode, such as a call mode, a recording mode, and a voice identification mode. The received audio signal may be further stored in the memory 1204 or transmitted via the communication component 1216. In some embodiments, the audio component 1210 further includes a speaker to output audio signal.

The I/O interface 1212 provides an interface between the processing component 1202 and peripheral interface modules, such as a keyboard, a click wheel, a button, or the like. The button may include, but not limited to, a home button, a volume button, a starting button, or a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keyboard, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other apparatuses. The apparatus 1200 is provided with Wi-Fi function and may access a wireless network based on a communication standard, such as WIFI, 2G, or 3G, or a combination thereof. In one exemplary embodiment, the communication component 1216 receives broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as instructions included in the memory 1204, executable by the processor 1220 in the apparatus 1200, for performing the above method. For example, the non-transitory computer-readable storage medium may be a ROM, a random access memory (RAM), a CD-ROM, a magnetic tape, a floppy disc, an optical data storage apparatus, or the like.

Other embodiments of the invention will be apparent to those skilled in the art from consideration of the specification and practice of the invention disclosed herein.

It is intended that the scope of the invention only be limited by the appended claims.

## Claims

1. A method of controlling access of a smart device to a router via a server, the smart device being provided with Wi-Fi function;
wherein the method comprises:
receiving (S200), at the server, from the smart device, (i) a collection comprising SSIDs of access-barred routers corresponding to an identifier of the smart device, and (ii) the identifier of the smart device for a mapping storage;
receiving (S201) at the server the identifier of the smart device and an SSID of a router currently accessed by the smart device;
acquiring (S202), from the mapping storage, at the server the collection comprising SSIDs of access-barred routers corresponding to the identifier of the smart device;
judging (S203) at the server whether the router currently accessed by the smart device is an access-barred router, according to the SSID of the router currently accessed and the collection comprising SSIDs of access-barred routers, to obtain a judgment result; and
transmitting (S204) from the server a corresponding instruction to the smart device according to the judgment result.

2. The method according to claim 1, wherein the transmitting a corresponding instruction to the smart device according to the judgment result comprises:
if the router currently accessed by the smart device is an access-barred router, transmitting a reset instruction to the smart device, the reset instruction instructing the smart device to resume a state of being not connected with any router; or
if the router currently accessed by the smart device is an access-barred router, transmitting a disconnect instruction to the smart device, the disconnect instruction instructing the smart device to disconnect a connection with the router currently accessed; or
if the router currently accessed by the smart device is an access-barred router, transmitting a reconnect instruction to the smart device, the reconnect instruction instructing the smart device to disconnect a connection with the router currently accessed and try to reconnect with another router.

3. The method according to claim 1, wherein the transmitting a corresponding instruction to the smart device according to the judgment result comprises:
if the router currently accessed by the smart device is an access-permitted router, transmitting a connection holding instruction to the smart device, the connection holding instruction instructing the smart device to hold a state of being connected with the router currently accessed.

4. A server for a smart device to access a router, the smart device being provided with Wi-Fi function and wherein the server comprises:
a first receiving module (61) configured to receive, from the smart device, an identifier of the smart device and an SSID of a router currently accessed by the smart device;
a second receiving module (65) configured to receive, from the smart device, the identifier of the smart device and a collection comprising SSIDs of access-barred routers corresponding to the identifier of the smart device for a mapping storage;
an acquiring module (62) configured to acquire, from the mapping storage, at the server the collection comprising SSIDs of access-barred routers corresponding to the identifier of the smart device;
a judgment module (63) configured to judge, at the server, whether the router currently accessed by the smart device is an access-barred router, according to the SSID of the router currently accessed and the collection comprising SSIDs of access-barred routers, to obtain a judgment result; and
a transmission module (64) configured to transmit from the server a corresponding instruction to the smart device according to the judgment result.

5. A smart device configured to access a router according to the method of any of claims 1 to 3, wherein the smart device is provided with Wi-Fi function and the smart device comprises:
a transmission module (91) configured to transmit, to the server, (i) a collection comprising SSIDs of access-barred routers corresponding to an identifier of the smart device and (ii) the identifier of the smart device, for a mapping storage, and to transmit the identifier of the smart device and the SSID of the router to the server when the smart device is to access the router, thereby enabling the server to judge whether the router currently accessed by the smart device is an access-barred router to obtain a judgment result; and
a receiving module (92) configured to receive from the server a corresponding instruction according to the judgment result.

6. The smart device according to claim 5, further comprising a process module comprising a resume submodule (931), a disconnection submodule (932), a reconnect submodule (933) and a connection hold submodule (934);
the resume submodule (931) configured to resume a state of being not connected with any router if the instruction is a reset instruction;
the disconnection submodule (932) configured to disconnect a connection with the router currently accessed if the instruction is a disconnect instruction;
the reconnect submodule (933) configured to disconnect a connection with the router currently accessed and try to connect with another router if the instruction is a reconnect instruction; and
the connection hold submodule (934) configured to hold a connection with the router currently accessed if the instruction is a connection hold instruction.

7. A computer program which, when being executed on a processor of a server, causes said server to perform a method according to any one of claims 1 to 3.

## Patentansprüche

1. Verfahren zur Steuerung des Zugriffs einer intelligenten Vorrichtung auf einen Router über einen Server, wobei die intelligente Vorrichtung mit einer Wi-Fi-Funktion bereitgestellt ist;
wobei das Verfahren umfasst:
Empfangen (S200), am Server, von der intelligenten Vorrichtung, (i) einer Sammlung, die SSIDs von Routern mit Zugriffssperre umfasst, die einer Kennung der intelligenten Vorrichtung entsprechen, und (ii) der Kennung der intelligenten Vorrichtung für einen Zuordnungsspeicher;
Empfangen (S201), am Server, der Kennung der intelligenten Vorrichtung und einer SSID eines Routers, auf den die intelligente Vorrichtung aktuell zugreift;
Erfassen (S202), von dem Zuordnungsspeicher, am Server, der Sammlung, die SSIDs von Routern mit Zugriffssperre umfasst, die der Kennung der intelligenten Vorrichtung entsprechen;
Beurteilen (S203), am Server, ob der Router, auf den die intelligente Vorrichtung aktuell zugreift, ein Router mit Zugriffssperre gemäß der SSID des Routers, auf den aktuell zugegriffen wird, und der Sammlung, die SSIDs von Routern mit Zugriffssperre umfasst, ist, um ein Beurteilungsergebnis zu erhalten; und
Übertragen (S204), von dem Server, einer entsprechenden Anweisung an die intelligente Vorrichtung gemäß dem Beurteilungsergebnis.

2. Verfahren nach Anspruch 1, wobei das Übertragen einer entsprechenden Anweisung an die intelligente Vorrichtung gemäß dem Beurteilungsergebnis umfasst:
wenn der Router, auf den die intelligente Vorrichtung aktuell zugreift, ein Router mit Zugriffssperre ist, Übertragen einer Rücksetzanweisung an die intelligente Vorrichtung, wobei die Rücksetzanweisung die intelligente Vorrichtung anweist, einen Zustand wieder aufzunehmen, in dem es mit keinem Router verbunden ist; oder
wenn der Router, auf den die intelligente Vorrichtung aktuell zugreift, ein Router mit Zugriffssperre ist, Übertragen einer Trennanweisung an die intelligente Vorrichtung, wobei die Trennanweisung die intelligente Vorrichtung anweist, eine Verbindung mit dem Router, auf den aktuell zugegriffen wird, zu trennen; oder
wenn der Router, auf den die intelligente Vorrichtung aktuell zugreift, ein Router mit Zugriffssperre ist, Übertragen einer Wiederverbindungsanweisung an die intelligente Vorrichtung, wobei die Wiederverbindungsanweisung die intelligente Vorrichtung anweist, eine Verbindung mit dem Router, auf den aktuell zugegriffen wird, zu trennen und zu versuchen, sich wieder mit einem anderen Router zu verbinden.

3. Verfahren nach Anspruch 1, wobei das Übertragen einer entsprechenden Anweisung an die intelligente Vorrichtung gemäß dem Beurteilungsergebnis umfasst:
wenn der Router, auf den die intelligente Vorrichtung aktuell zugreift, ein zugriffsberechtigter Router ist, Übertragen einer Verbindungshalteanweisung an die intelligente Verbindung, wobei die Verbindungshalteanweisung die intelligente Vorrichtung anweist, einen Zustand zu halten, in dem sie mit dem Router verbunden ist, auf den aktuell zugegriffen wird.

4. Server für eine intelligente Vorrichtung zum Zugriff auf einen Router, wobei die intelligente Vorrichtung mit einer Wi-Fi-Funktion bereitgestellt ist und wobei der Server umfasst:
ein erstes Empfangsmodul (61), das konfiguriert ist, um von der intelligenten Vorrichtung eine Kennung der intelligenten Vorrichtung und eine SSID eines Routers zu empfangen, auf den die intelligente Vorrichtung aktuell zugreift;
ein zweites Empfangsmodul (65), das konfiguriert ist, um von der intelligenten Vorrichtung die Kennung der intelligenten Vorrichtung und eine Sammlung, die SSIDs von Routern mit Zugriffssperre umfasst, die der Kennung der intelligenten Vorrichtung entsprechen, für einen Zuordnungsspeicher zu empfangen;
ein Erfassungsmodul (62), das konfiguriert ist, um von dem Zuordnungsspeicher am Server die Sammlung zu erfassen, die SSIDs von Routern mit Zugriffssperre umfasst, die der Kennung der intelligenten Vorrichtung entsprechen;
ein Beurteilungsmodul (63), das konfiguriert ist, um am Server zu beurteilen, ob der Router, auf den die intelligente Vorrichtung aktuell zugreift, ein Router mit Zugriffssperre gemäß der SSID des Routers, auf den aktuell zugegriffen wird, und der Sammlung, die SSIDs von Routern mit Zugriffssperre umfasst, ist, um ein Beurteilungsergebnis zu erhalten; und
ein Übertragungsmodul (64), das konfiguriert ist, um vom Server eine entsprechende Anweisung an die intelligente Vorrichtung gemäß dem Beurteilungsergebnis zu übertragen.

5. Intelligente Vorrichtung, die konfiguriert ist, um auf einen Router gemäß dem Verfahren nach einem der Ansprüche 1 bis 3 zuzugreifen, wobei die intelligente Vorrichtung mit einer Wi-Fi-Funktion bereitgestellt ist und wobei die intelligente Vorrichtung umfasst:
ein Übertragungsmodul (91), das konfiguriert ist, um an den Server (i) eine Sammlung, die SSIDs von Routern mit Zugriffssperre umfasst, die einer Kennung der intelligenten Vorrichtung entsprechen, und (ii) die Kennung der intelligenten Vorrichtung für einen Zuordnungsspeicher zu übertragen und die Kennung der intelligenten Vorrichtung und die SSID des Routers an den Server zu übertragen, wenn die intelligente Vorrichtung auf den Router zugreifen soll, wodurch der Server in die Lage versetzt wird, zu beurteilen, ob der Router, auf den die intelligente Vorrichtung aktuell zugreift, ein Router mit Zugriffssperre ist, um ein Beurteilungsergebnis zu erhalten; und
ein Empfangsmodul (92), das konfiguriert ist, um von dem Server eine entsprechende Anweisung gemäß dem Beurteilungsergebnis zu empfangen.

6. Intelligente Vorrichtung nach Anspruch 5, weiter umfassend ein Prozessmodul, das ein Wiederaufnahme-Untermodul (931), ein Trennungs-Untermodul (932), ein Wiederverbindungs-Untermodul (933) und ein Verbindungshalte-Untermodul (934) umfasst;
wobei das Wiederaufnahme-Untermodul (931) konfiguriert ist, um einen Zustand, in dem es mit keinem Router verbunden ist, wieder aufzunehmen, wenn die Anweisung eine Rücksetzanweisung ist;
wobei das Trennungs-Untermodul (932) konfiguriert ist, um eine Verbindung mit dem Router, auf den aktuell zugegriffen wird, zu trennen, wenn die Anweisung eine Trennungsanweisung ist;
wobei das Wiederverbindungs-Untermodul (933) konfiguriert ist, um eine Verbindung mit dem Router, auf den aktuell zugegriffen wird, zu trennen und zu versuchen, sich wieder mit einem anderen Router zu verbinden, wenn die Anweisung ein Wiederverbindungsanweisung ist; und
wobei das Verbindungshalte-Untermodul (934) konfiguriert ist, um eine Verbindung mit dem Router zu halten, auf den aktuell zugegriffen wird, wenn die Anweisung eine Verbindungshalteanweisung ist.

7. Computerprogramm, das, wenn es auf einem Prozessor eines Servers ausgeführt wird, den Server veranlasst, ein Verfahren nach einem der Ansprüche 1 bis 3 durchzuführen.

## Revendications

1. Procédé de commande de l'accès d'un dispositif intelligent à un routeur via un serveur, le dispositif intelligent étant doté d'une fonction Wifi ;
dans lequel le procédé comprend :
la réception (5200), au niveau du serveur, à partir du dispositif intelligent, (i) d'une collection comprenant des SSID de routeurs interdits d'accès correspondant à un identificateur du dispositif intelligent, et (ii) de l'identificateur du dispositif intelligent pour un dispositif de stockage de mappage ;
la réception (S201), au niveau du serveur, de l'identificateur du dispositif intelligent et d'un SSID d'un routeur auquel le dispositif intelligent a accédé actuellement;
l'acquisition (5202), à partir du dispositif de stockage de mappage, au niveau du serveur, de la collection comprenant des SSID de routeurs interdits d'accès correspondant à l'identificateur du dispositif intelligent ;
le jugement (S203), au niveau du serveur, si le routeur auquel le dispositif intelligent a accédé actuellement est un routeur interdit d'accès, en fonction du SSID du routeur auquel il a été accédé actuellement et de la collection comprenant des SSID de routeurs interdits d'accès, pour obtenir un résultat de jugement ; et
la transmission (5204), à partir du serveur, d'une instruction correspondante au dispositif intelligent en fonction du résultat de jugement.

2. Procédé selon la revendication 1, dans lequel la transmission d'une instruction correspondante au dispositif intelligent en fonction du résultat de jugement comprend :
si le routeur auquel le dispositif intelligent a accédé actuellement est un routeur interdit d'accès, la transmission d'une instruction de réinitialisation au dispositif intelligent, l'instruction de réinitialisation ordonnant au dispositif intelligent de reprendre un état où il n'est pas connecté avec un quelconque routeur ; ou
si le routeur auquel le dispositif intelligent a accédé actuellement est un routeur interdit d'accès, la transmission d'une instruction de déconnexion au dispositif intelligent, l'instruction de déconnexion ordonnant au dispositif intelligent de déconnecter une connexion avec le routeur auquel il a été accédé actuellement ; ou
si le routeur auquel le dispositif intelligent a accédé actuellement est un routeur interdit d'accès, la transmission d'une instruction de reconnexion au dispositif intelligent, l'instruction de reconnexion ordonnant au dispositif intelligent de déconnecter une connexion avec le routeur auquel il a été accédé actuellement et de tenter de se reconnecter avec un autre routeur.

3. Procédé selon la revendication 1, dans lequel la transmission d'une instruction correspondante au dispositif intelligent en fonction du résultat de jugement comprend :
si le routeur auquel le dispositif intelligent a accédé actuellement est un routeur autorisé à l'accès, la transmission d'une instruction de maintien de connexion au dispositif intelligent, l'instruction de maintien de connexion ordonnant au dispositif intelligent de maintenir un état où il est connecté avec le routeur auquel il a été accédé actuellement.

4. Serveur pour un dispositif intelligent pour accéder à un routeur, le dispositif intelligent étant doté d'une fonction Wifi et dans lequel le serveur comprend :
un premier module de réception (61) configuré pour recevoir, à partir du dispositif intelligent, un identificateur du dispositif intelligent et un SSID d'un routeur auquel le dispositif intelligent a accédé actuellement ;
un second module de réception (65) configuré pour recevoir, à partir du dispositif intelligent, l'identificateur du dispositif intelligent et une collection comprenant des SSID de routeurs interdits d'accès correspondant à l'identificateur du dispositif intelligent pour un dispositif de stockage de mappage ;
un module d'acquisition (62) configuré pour acquérir, à partir du dispositif de stockage de mappage, au niveau du serveur, la collection comprenant des SSID de routeurs interdits d'accès correspondant à l'identificateur du dispositif intelligent ;
un module de jugement (63) configuré pour juger, au niveau du serveur, si le routeur auquel le dispositif intelligent a accédé actuellement est un routeur interdit d'accès, en fonction du SSID du routeur auquel il a été accédé actuellement et de la collection comprenant des SSID de routeurs interdits d'accès, pour obtenir un résultat de jugement; et
un module de transmission (64) configuré pour transmettre, à partir du serveur, une instruction correspondante au dispositif intelligent en fonction du résultat de jugement.

5. Dispositif intelligent configuré pour accéder à un routeur conformément au procédé selon l'une quelconque des revendications 1 à 3, dans lequel le dispositif intelligent est doté d'une fonction Wifi et le dispositif intelligent comprend :
un module de transmission (91) configuré pour transmettre, au serveur, (i) une collection comprenant des SSID de routeurs interdits d'accès correspondant à un identificateur du dispositif intelligent, et (ii) l'identificateur du dispositif intelligent, pour un dispositif de stockage de mappage, et pour transmettre l'identificateur du dispositif intelligent et le SSID du routeur au serveur quand le dispositif intelligent doit accéder au routeur, en permettant ainsi au serveur de juger si le routeur auquel le dispositif intelligent a accédé actuellement est un routeur interdit d'accès pour obtenir un résultat de jugement ; et
un module de réception (92) configuré pour recevoir, à partir du serveur, une instruction correspondante en fonction du résultat de jugement.

6. Dispositif intelligent selon la revendication 5, comprenant en outre un module de traitement comprenant un sous-module de reprise (931), un sous-module de déconnexion (932), un sous-module de reconnexion (933) et un sous-module de maintien de connexion (934) ;
le sous-module de reprise (931) étant configuré pour reprendre un état où il n'est pas connecté avec un quelconque routeur si l'instruction est une instruction de réinitialisation ;
le sous-module de déconnexion (932) étant configuré pour déconnecter une connexion avec le routeur auquel il a été accédé actuellement si l'instruction est une instruction de déconnexion ;
le sous-module de reconnexion (933) étant configuré pour déconnecter une connexion avec le routeur auquel il a été accédé actuellement et tenter de se reconnecter avec un autre routeur si l'instruction est une instruction de reconnexion ; et
le sous-module de maintien de connexion (934) étant configuré pour maintenir une connexion avec le routeur auquel il a été accédé actuellement si l'instruction est une instruction de maintien de connexion.

7. Programme informatique qui, quand il est exécuté sur un processeur d'un serveur, amène ledit serveur à effectuer un procédé selon l'une quelconque des revendications 1 à 3.
